# EUROPEAN PATENT APPLICATION

(11) **EP 3 763 558 A1**
(43) Date of publication of application: **13.01.2021**
(21) Application number: 19185283.9
(22) Date of filing: 09.07.2019
(51) Int. Cl.: B60L 53/16

(54) **ELECTROMECHANICAL ACTUATOR FOR LOCKING A CHARGING CABLE IN A CHARGING RECEPTACLE**

(71) Applicant: Jabil Inc., St. Petersburg, Florida 33716 (US)
(72) Inventor: Kovacs, Ernst, 2514 Traiskirchen (AT)
(74) Representative: Röggla, Harald

(57) **Abstract**

The invention relates to an electromechanical actuator (20) for locking a charging cable (1) in a charging receptacle (21), wherein the actuator (20) comprises a housing (22), a locking pin (23) and a drive (25), which is configured to move the locking pin (23) from a first position, in which the locking pin (23) releases the charging cable (1), to a second position, in which the locking pin (23) engages in an opening (6) of the charging cable (1) inserted into the charging receptacle (21), wherein the actuator (20) comprises a guide (24) for the locking pin (23), wherein the guide (24) and the drive (25) are located at least partially outside of the housing (22), wherein the guide (24) comprises, outside of the housing (22), an elongated section (29) for guiding the locking pin (23) and an end section (30) for aligning the guide (24) with the charging receptacle (21). The invention further relates to a charging receptacle (21) complementary with said actuator.

## Description

The present invention relates to an electromechanical actuator for locking a charging cable in a charging receptacle, wherein the actuator comprises a housing and a locking pin and is configured to move the locking pin from a first position, in which the locking pin releases the charging cable, to a second position, in which the locking pin engages in an opening of the charging cable inserted into the charging receptacle. Furthermore, the invention relates to a charging receptacle for receiving an actuator, wherein the charging receptacle has an opening for receiving the end section of the actuator and a housing that is complementary to the housing of the charging receptacle such that the guide can be enclosed between the housing of the actuator and the housing of the charging receptacle when mounted.

In the art it is known to secure charging cables, for example charging cables for electric vehicles, against theft or accidental removal. To this end, an electromechanical actuator is used, which comprises a locking pin. The locking pin can be inserted into a hole of the charging receptacle as well as into an opening in the charging cable to lock the charging cable with the charging receptacle and the actuator, respectively. To this end, the actuator comprises a drive, which can be controlled by means of electrical signals. This allows for a remote locking and unlocking of the charging cable, for example.

It is generally preferred if the charging receptacle and the electromechanical actuator are manufactured and distributed by different entities to replace or add actuators as needed. Usually, the actuator is provided as a module with a box-like housing, which has an opening from which the locking pin protrudes. This actuator box can then be replaced in case of failure or upgrade.

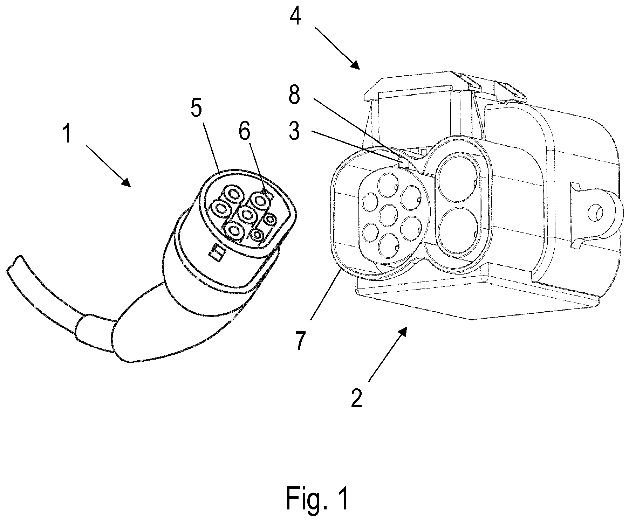

In the following, two such embodiments according to the state of the art will be described by means of figures 1 to 3 and figures 4 and 5, respectively.

In the first embodiment according to the state of the art (figures 1 to 3), a charging cable 1 can be locked in a charging receptacle 2 by means of a locking pin 3 of an actuator 4. The charging cable 1 here has an inner guiding wall 5 comprising an opening 6 for receiving the locking pin 3. Likewise, the charging receptacle 2 has an outer guiding wall 7 provided with a hole 8 through which the locking pin 3 can emerge to enter the openings 6 of the charging cable 1. When the charging cable 1 is connected to the charging receptacle 2, the outer guiding wall 7 of the charging receptacle 2 surrounds the inner guiding wall 5 of the charging cable 1 such that the outer guiding wall 7 lies between the actuator 4 and the inner guiding wall 5.

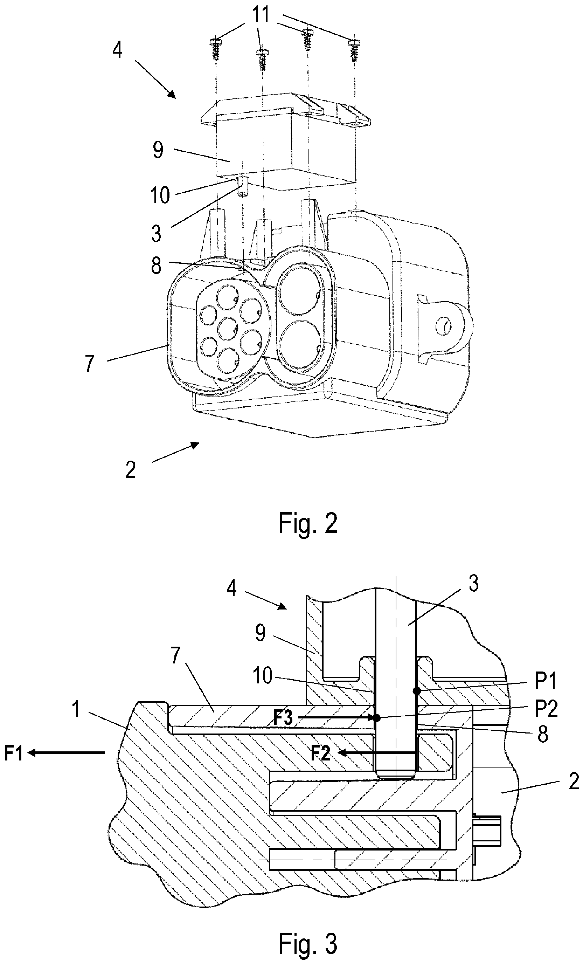

As can be seen in detail in figure 2, the actuator 4 has a box-like housing 9 through which the locking pin 3 protrudes at an opening 10. The box-like housing 9 is mounted onto the charging receptacle 2 by means of screws 11. Inside the housing 9, the actuator 4 comprises a drive for moving the locking pin 3 from a first position into a second position. In the first position, the locking pin 3 releases the charging cable 1, i.e., the locking pin 3 is in a retracted position such that it does not protrude into the opening 6. In the second position, the locking pin 3 is in an extended position in which the locking pin 3 protrudes into the opening 6 if the charging cable 1 is connected to the charging receptacle 2.

Figure 3 shows that in this embodiment, in which the housing 9 of the actuator 4 is placed seamlessly onto the charging receptacle 2, the locking pin 3 is guided by a section of the housing 9 within the actuator 4 at a position PI and by the charging receptacle 2 at a position P2.

In this embodiment according to the state of the art, the locking pin 3 has to be mounted precisely within the housing 9 to ensure that there is no tension at position PI to make the transmission between drive and locking pin 3 as efficient as possible. To support the locking pin 3 in the second position during an attempt to pull the charging cable out of the charging receptacle 2, the locking pin 3 is supported at position P2 within the charging receptacle 2. For example, if the locked charging cable 1 is pulled with a force F1, the same force F2 is applied onto the locking pin 3. To keep the occurring tensions at a minimum, the locking pin 3 is supported by the charging receptacle 2 at position P2 with a force F3.

In this embodiment, the actuator 4 has to be precisely aligned with respect to the charging receptacle 2 such that the hole 8 of the charging receptacle 2 and the opening 10 of the actuator 4 are exactly above each other. However, due to manufacturing and calibration constraints, it can still occur that the locking pin 3 is jammed between positions PI and P2.

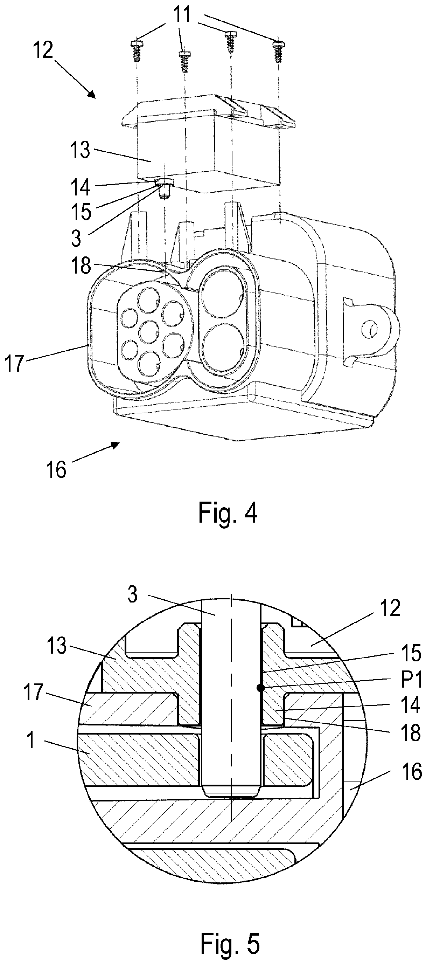

Figures 4 and 5 show a second embodiment according to the state of the art, which is a partial solution to the problem described above. To lock the charging cable 1, an actuator 12 has a housing 13, which comprises a ring-shaped protrusion 14 around an opening 15 for the locking pin 3, which is substantially the same as in the first embodiment. This actuator 12 is used in conjunction with a charging receptacle 16 having an outer guiding wall 17 with a hole 18, which has a diameter complementing the outer diameter of the protrusion 14, as can be seen in detail in figure 5.

When the protrusion 14 is inserted into the hole 18, the locking pin 3 is not supported by the outer guiding wall 17 of the charging receptacle 16 anymore but only by the protrusion 14 of the housing 13. Therefore, the locking pin 3 is guided only at position PI and a mounting position P2 between locking pin 3 and housing 17 of the charging receptacle 16 does not exist in this embodiment.

However, in some applications there is not enough room for actuators 3 with a fully enclosing box-shaped housing 13. In these cases, also mounting position PI between the locking pin 3 and the housing 13 cannot be provided.

It is therefore an aim of the invention to provide an alternative actuator for locking a charging cable in a charging receptacle that can be used even in applications with limited space available. This actuator should still be configured to avoid a jamming of the locking pin 3 during use.

This aim is achieved in a first aspect of the invention by an electromechanical actuator for locking a charging cable in a charging receptacle, wherein the actuator comprises a housing, a locking pin and a drive, which is configured to move the locking pin from a first position, in which the locking pin releases the charging cable, to a second position, in which the locking pin engages in an opening of the charging cable inserted into the charging receptacle, wherein the actuator comprises a guide for the locking pin, wherein the guide and the drive are located at least partially outside of the housing, and wherein the guide comprises, outside of the housing, an elongated section for guiding the locking pin and an end section for aligning the guide with the charging receptacle.

The inventive actuator has the advantage that an actuator with a low space requirement can be provided. For example, the housing can be restricted to a simple plate on which the electromechanical components such as drive, guide, and locking pin are mounted. However, if the locking pin would simply protrude from the housing, the locking pin would be prone to jamming in the charging receptacle. Therefore, the guide is provided, which on the one hand guides the locking pin in a radial direction and enables an axial movement thereof by means of the elongated section and on the other hand enables the alignment of the actuator with respect to the charging receptacle by means of the end section.

Preferably, the guide comprises a nose for aligning the guide with respect to the housing. This is especially preferred in embodiments in which the guide has a cylindrical outer shape. In these cases, the nose prevents the guide from rotating, to which end also the housing has a notch or the like for holding the nose.

It is furthermore advantageous if the locking pin comprises a rack and the drive comprises a pinion for driving the locking pin. Other mechanisms could be provided, too, for providing a linear movement of the locking pin. However, the rack and pinion drive has the advantage that the rack can simultaneously be used to prevent the locking pin from rotating in the guide if the guide comprises a recess for the rack of the locking pin. Furthermore, the rack and pinion drive provides a better power efficiency than a spindle drive, for example.

In a preferred embodiment, the locking pin has a cylindrical cross-section and the guide has a corresponding cylindrical hole for guiding the locking pin. This allows the locking pin to interact with locking holes and locking openings of most commonly available charging receptacles and charging cables.

Further preferably, the actuator comprises a gasket at the end section of the guide for sealing the end section of the guide with the charging receptacle, wherein the gasket has a hole for receiving the locking pin. This setup is especially advantageous as the gasket seals not only the gap between the locking pin and the guide but also between the charging receptacle and the guide.

In a second aspect of the invention, there is provided a charging receptacle for receiving the actuator according to any one of the embodiments described above, wherein the charging receptacle has an opening for receiving the end section of the actuator and a housing that is complementary to the housing of the charging receptacle such that the guide can be enclosed between the housing of the actuator and the housing of the charging receptacle when mounted.

The opening of the charging receptacle can be provided in that either the charging receptacle has a hole with a diameter of the guide, for example, or a protrusion for receiving the guide. In other words, the opening for the guide has a size that is larger than a size of the locking pin. The housing of this charging receptacle is furthermore configured to be complementary to the housing of the actuator. Such a complementary housing allows for small-sized actuators, i.e., actuators that do not have a box-shaped housing, to be mounted on the charging receptacle.

The above-mentioned actuator together with the above-mentioned charging receptacle form a charging device combining the advantages described above. For this charging device it is then preferred if the actuator is mounted onto the charging receptacle by means of screws for achieving a secure mounting.

Further details and advantages of the electromechanical actuator and charging receptacle according to the invention will become more apparent in the following description and the accompanying drawings.

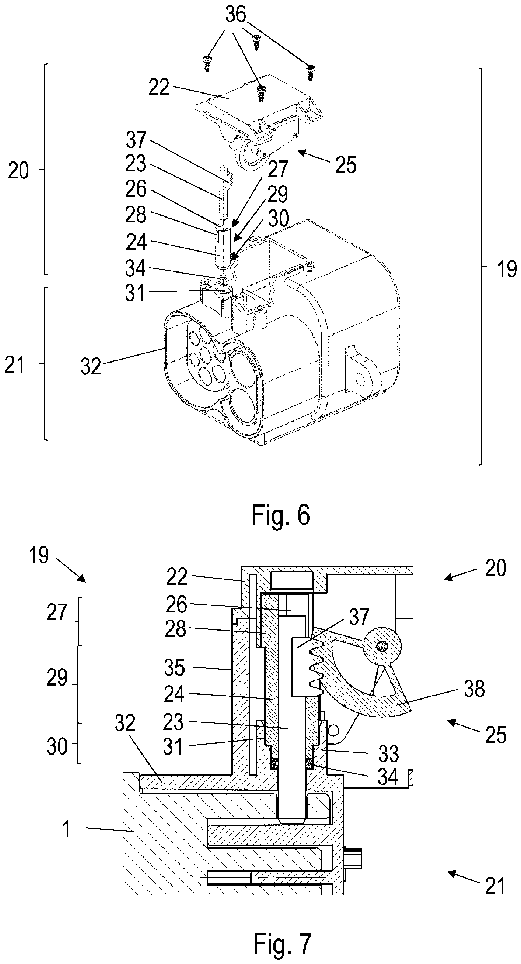

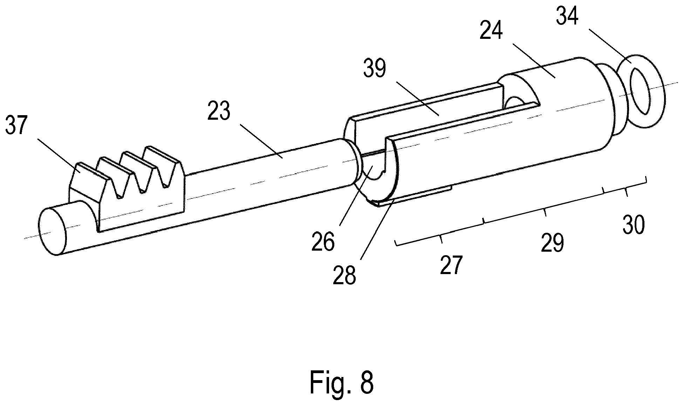

Figure 6 shows a charging device according to the invention in a perspective view. Figure 7 shows a detail of the charging device of figure 6 when mounted in a sectional view. Figure 8 shows the guide and locking pin of the charging device of figure 6 in a perspective view.

Figure 6 shows a charging device 19 comprising an electromechanical actuator 20 and a charging receptacle 21. The charging device 19 is configured to lock a charging cable 1 having properties as described above with respect to the state of the art.

The electromechanical actuator 20 comprises a housing 22, a locking pin 23, a guide 24, and a drive 25. The locking pin 23, the guide 24, and the drive 25 are located at least partially, preferably completely, outside of the housing 22, which can be a cover plate in one embodiment. Preferably, more than 50% of a length of the locking pin 23 and/or of the guide 24 are located outside of the housing 22. Furthermore, housing 22 and guide 24 are in most embodiments made out of different materials. For example, the housing 22 can be made out of plastic and the guide 24 can be made out of metal or a different plastic. In some embodiments, the housing 22 can enclose other components such as a control circuitry and/or a receiver for wirelessly receiving control signals for the drive 25.

The drive 25 is configured to move the locking pin 23 from a first position (retracted position) to a second position (extended position). In the first position, the locking pin 23 releases the charging cable 1 and in the second position the locking pin 23 engages in an opening of the charging cable 1 inserted into the charging receptacle 21.

The locking pin 23 is at least partially inserted into the guide 24 such that the guide 24 supports the locking pin 23 especially in cases when the charging cable 1 is attempted to be pulled out of the charging receptacle 21. To this end, the guide 24 has a hole 26 that complements the shape of the locking pin 23. For example, the locking pin 23 can have a cylindrical cross-section and the guide 24 can have a corresponding cylindrical hole 26 for guiding the locking pin 23. Other cross-sectional areas of the locking pin 23 could be provided too such as a rectangular cross-section.

The guide 24 is mounted onto the housing 22 by means of a mounting section 27 of the guide 24, where it is equipped with a nose 28. The nose 28 aligns the guide 24 with respect to the housing 22, which for this purpose can have a notch for receiving the nose 28. Alternatively, the guide could already have an outer shape, e.g., with a rectangular cross-section, that allows for an alignment of the guide 24 with respect to the housing 22.

Following the mounting section 27, the guide 24 has an elongated section 29 for guiding the locking pin 23 and an end section 30 for aligning the guide 24 with the charging receptacle 21. The elongated section 29 is configured for guiding the locking pin 23 and the end section 30 is configured for aligning the guide 24 with the charging receptacle 21. The guide 24 is in most cases embodied as a single piece such that sections 27, 29, and 30 are different sections of the same cylinder, for example. In the simplest case, the guide 24 could even be a cylinder with a constant outer diameter and a constant inner diameter for receiving the locking pin 23. Guiding section 29 and end section 30 typically lie outside of the housing 22, while the mounting section 27 can be located within the housing 22 or outside thereof. The guiding section 29 is the section that lies between the housing 22 and the receptacle 21 in the mounted state of the charging device 19 and the end section 20 is the section that lies within the charging receptacle 21 in the mounted state of the charging device 19. Guiding section 29 preferably makes up at least 50% of the length of the guide 24. Further preferably, the length of the guide 24 is at least twice or at least three times longer than the outer diameter of the guide 24.

Figure 7 shows in detail the alignment of the guide 24 with respect to the charging receptacle 21. Here, the charging receptacle 21 comprises an opening 31 for receiving the end section 30 of the guide 24. The opening 31 can either be a simple bore into an outer guiding wall 32 of the charging receptacle 21 or it can comprise a protrusion 33 as shown in figure 7. The protrusion 33 has the advantage that it can align and hold the guide 24 in an improved manner. In general, end section 30 of the guide 24 and opening 31 are configured to be complementary to each other.

As can be seen in figure 7, end section 30 of the guide 24 is inserted into the opening 31 such that the guide 24 is aligned with respect to the charging receptacle 21. Furthermore, guiding section 29 and mounting section 27 lie outside of the opening 31. Moreover, opening 31 can have different diameters, of which one substantially corresponds to the outer diameter of the locking pin 23 and one corresponds to the maximum outer diameter of the end section 30 of the guide 24. In other embodiments, the opening 31 could have only one diameter corresponding to a maximum outer diameter of the end section 31 of the guide 24. Furthermore, in some embodiments the opening 31 is at all points substantially larger than the diameter of the locking pin 23.

Additionally, a gasket 34 can be arranged at the end section 30 of the guide 24 for sealing the end section 30 of the guide 20 with the charging receptacle 21, wherein the gasket 34 has a hole for receiving the locking pin 23. The end section 30 of the guide 24 can be tapered or in general have at its end a cross-sectional area to complement the size of the gasket 34.

To enclose the guide 24 and/or the drive 25 between the housing 22 of the actuator 20 and the charging receptacle 21, the charging receptacle 21 can have a housing 35 that is complementary to the housing 22 of the actuator. For example, the housing 35 of the charging receptacle 21 could be surrounding walls if the housing 22 of the actuator 20 is a cover plate or flat box. Screws 36 (figure 6) can then be used to mount the housing 22 of the actuator 20 onto the charging receptacle 21 such that guide 24 and/or drive 25 are fully enclosed between housings 22 and 35.

As is shown in figures 7 and 8 in detail, the locking pin 23 comprises a rack 37 and the drive 25 comprises a pinion 38, e.g., a sectional pinion, for driving the locking pin 23. To this end, the guide 24 comprises a recess 39 for the rack 37 of the locking pin 23, as can be seen in figure 8. The recess 39 prevents the locking pin 23 from rotating within the guide 24. Upon driving the pinion 38, the locking pin 23 can be moved in a linear manner from the first to the second position and back, i.e., rotating the pinion 38 can lock and unlock the charging cable 1. Locking pin 23 and rack 37 can be formed as a single piece or rack 37 could be welded onto the locking pin 23.

Other variants for the drive 25 and corresponding transmissions for the locking pin 23 could be used, too, to provide a linear movement of the locking pin 23. For example, the locking pin 23 could be driven by means of a spindle drive, which would however have a lower power efficiency than the rack and pinion drive.

The construction of the charging device according to the invention shown in figures 6 to 8 is in particular advantageous as guide 24 is realized as separate part mechanically connected to the housing 22 of the actuator 20 and the outer guiding wall 32 of the charging receptacle 21. Even if there is a mismatch of the opening in housing 22 and opening 31 in the outer guiding wall 32 due to tolerances in manufacturing, locking pin 23 will still be guided by guide 24 without forces that influence its function.

## Claims

1. Electromechanical actuator (20) for locking a charging cable (1) in a charging receptacle (21), wherein the actuator (20) comprises a housing (22), a locking pin (23) and a drive (25), which is configured to move the locking pin (23) from a first position, in which the locking pin (23) releases the charging cable (1), to a second position, in which the locking pin (23) engages in an opening (6) of the charging cable (1) inserted into the charging receptacle (21),
**characterised in that**
the actuator (20) comprises a guide (24) for the locking pin (23), wherein the guide (24) and the drive (25) are located at least partially outside of the housing (22), wherein the guide (24) comprises, outside of the housing (22), an elongated section (29) for guiding the locking pin (23) and an end section (30) for aligning the guide (24) with the charging receptacle (21).

2. Actuator (20) according to claim 1, wherein the guide (24) comprises a nose (28) for aligning the guide (24) with respect to the housing (22).

3. Actuator (20) according to claim 1 or 2, wherein the locking pin (23) comprises a rack (37) and the drive (25) comprises a pinion (38) for driving the locking pin (23).

4. Actuator (20) according to claim 3, wherein the guide (24) comprises a recess (39) for the rack (37) of the locking pin (23) such that the rack (37) prevents the locking pin (23) from rotating within the guide (24).

5. Actuator (20) according to any one of claims 1 to 4, wherein the locking pin (23) has a cylindrical cross-section and the guide (24) has a corresponding cylindrical hole (26) for guiding the locking pin (23).

6. Actuator (20) according to any one of claims 1 to 5, comprising a gasket (34) at the end section (30) of the guide (24) for sealing the end section (30) of the guide (24) with the charging receptacle (21), wherein the gasket (34) has a hole for receiving the locking pin (23).

7. Charging receptacle (21) for receiving the actuator (20) according to any one of claims 1 to 6, wherein the charging receptacle (21) has an opening (31) for receiving the end section (30) of the actuator (20) and a housing (35) that is complementary to the housing (22) of the actuator (20) such that the guide (24) can be enclosed between the housing (22) of the actuator (20) and the housing (35) of the charging receptacle (21) when mounted.

8. Charging receptacle (21) according to claim 7, wherein the opening (31) is surrounded by a protrusion (14) for holding the end section (30) of the guide (24).

9. Charging device (19) comprising the actuator (20) of any one of claims 1 to 6 and the charging receptacle (21) according to claim 7 or 8.

10. Charging device (19) according to claim 8, wherein the actuator (20) is mounted onto the charging receptacle (21) by means of screws (36).
